# EUROPEAN PATENT SPECIFICATION

(11) **EP 1 724 144 B1**
(45) Date of publication and mention of the grant of the patent: **11.07.2012**
(21) Application number: 05425351.3
(22) Date of filing: 20.05.2005
(51) Int. Cl.: B60K 15/04, B23K 26/08, B23K 26/28

(54) **A method for welding the filler neck of the fuel tank of a motor vehicle**
Ein Verfahren zum Schweißen des Einfüllstutzens des Treibstoffbehälters eines Kraftfahrzeuges
Une méthode pour souder la tubulure de remplissage du réservoir de carburant d'un véhicule automobile

(43) Date of publication of application: 22.11.2006
(73) Proprietor: DYTECH - Dynamic Fluid Technologies S.p.A., 10123 Torino (IT)
(72) Inventor: Cantello, Maichi, 10011 Aglie' (IT)
(74) Representative: Jorio, Paolo

(56) References cited:
- EP-A- 0 672 496
- US-A1- 2002 100 160

## Description

### TECHNICAL SECTOR

The present invention relates to a method for welding the filler neck of the fuel tank of a motor vehicle as disclosed in the preamble of claim 1. In particular, the invention relates to welding of a breather pipe to a main pipe of the filler neck. US 2002/0100160 A discloses such a method.

### STATE OF THE PRIOR ART

As is known, filler necks for fuel tanks are prevalently made of plastic material, since plastic materials have become available that are able to meet up to the technical requirements necessary for this application (resistance to chemical aggression of fuels, mechanical resistance, etc.). The technologies of moulding of plastic materials moreover enable complex geometries to be obtained easily and various components to be welded conveniently together.

In the last few years, however, there has been a return by some automobile manufacturers to the use of filler necks made of metal, and in particular stainless steel, the aim being to ensure maximum mechanical resistance in the case of impact and, at the same time, maximum chemical resistance to the aggression of fuel, thus obtaining filler necks that are safe and reliable over time.

The use of steel, and in particular stainless steel, sets, however, technological problems both as far as the geometries that can be obtained are concerned and as far as welding of the various components together is concerned.

In particular, a filler neck for the fuel tank of a motor vehicle typically comprises a main pipe provided with an inlet filler designed to receive the delivery gun of a refuelling system and designed to be tightly connected to the tank, and a breather pipe for the fuel vapours connected so that it branches off from the main pipe, for example, from the filler or downstream thereof. The breather pipe is designed to be connected, in use, to a breather port of a device for recovery of the vapours associated to the tank.

In the case where said components are made of metal, and in particular of stainless steel, it is known to connect them together by means of brazing. This technique, however, presents drawbacks both from the standpoint of mechanical resistance and reliability, which are not sufficient to meet the most stringent specifications of automobile manufacturers, and from the standpoint of costs, given that in fact the cost of the filler metal is very high.

### OBJECT OF THE INVENTION

The aim of the present invention is to define a method for welding a breather pipe to the main pipe of a filler neck for the tank of a motor vehicle which will be free from the drawbacks connected to known methods.

The above aim is achieved by a welding method according to Claim 1.

### BRIEF DESCRIPTION OF THE DRAWINGS

For a better understanding of the present invention a preferred embodiment is described in what follows, by way of non-limiting example and with reference to the attached plate of drawings, wherein:
Figure 1 is a schematic side elevation and partial cross-sectional view of equipment for welding a breather pipe to the main pipe of a filler neck for the tank of a motor vehicle according to the present invention;
Figure 2 is a front and partial cross-sectional view of the equipment of Figure 1;
Figure 3 is a schematic plan view of a rotary table of the equipment of Figure 1, with parts omitted for reasons of clarity;
Figure 4 illustrates a focusing head of the equipment of Figures 1 and 2, during a welding step;
Figure 5 is a diagram illustrating the movement of the focusing head during the welding operation, in elevation; and
Figure 6 is a diagram illustrating the movement of the focusing head during the welding operation, in plan view.

### PREFERRED EMBODIMENT OF THE INVENTION

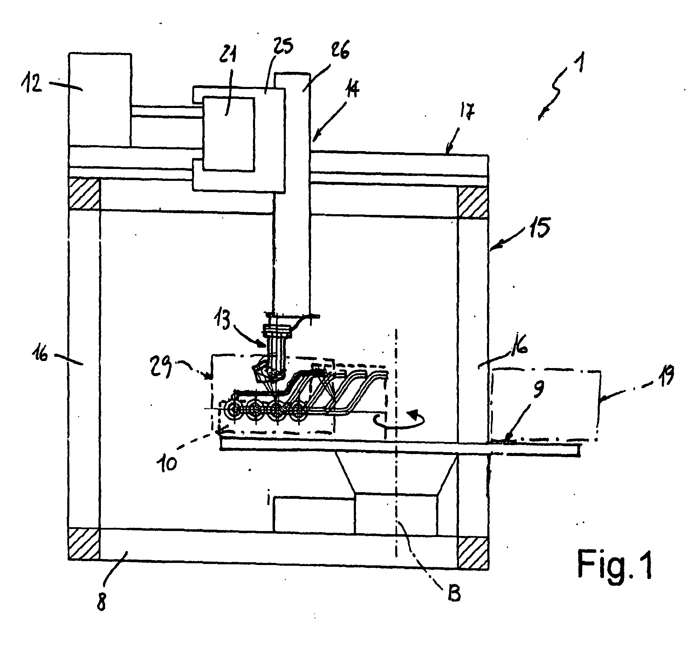

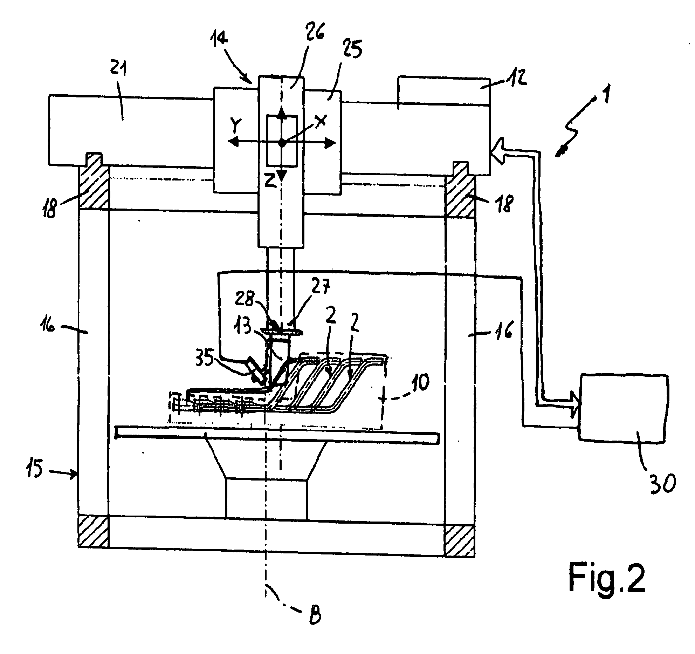

With reference to Figures 1 and 2, designated by the reference number 1 is equipment for welding filler necks 2 for the fuel tanks of motor vehicles.

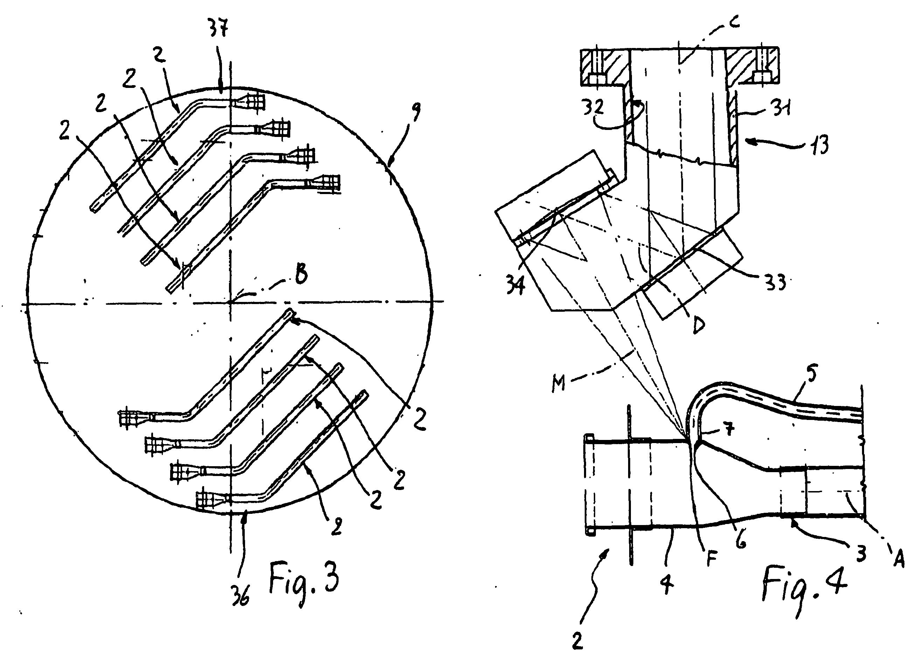

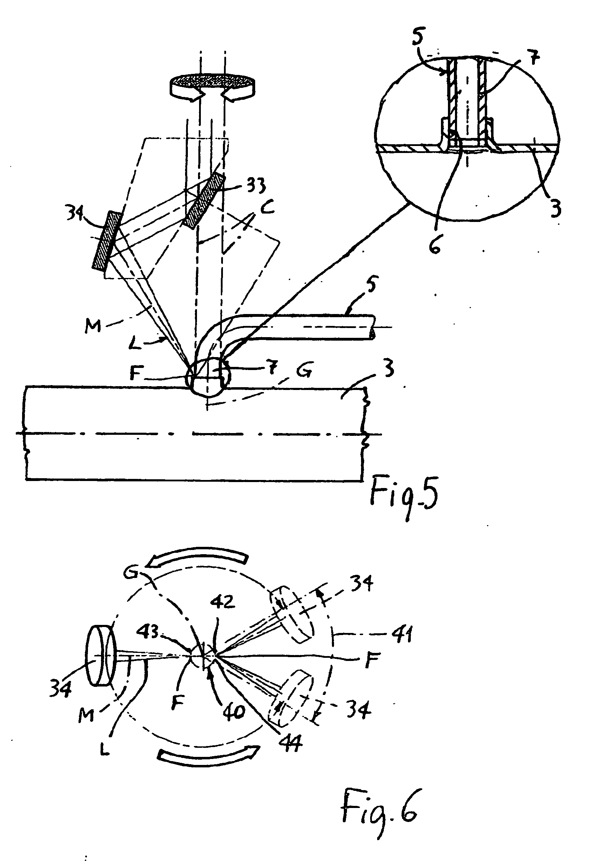

The filler neck 2 (Figure 4) typically comprises a main pipe 3 of axis A, provided with an inlet filler 4 designed to house a delivery gun of a refuelling system (not illustrated), and a breather pipe 5 for the fuel vapours connected so that it branches off from the main pipe 3. The latter is provided, for this purpose, with a seat 6 made in the filler (Figure 4) or downstream thereof (Figure 5), in which an end 7 of the breather pipe 5 engages, as is clearly visible in the enlarged detail of Figure 5.

The seat 6 can be a simple hole, as is illustrated in Figure 4, but is preferably defined by an annular collar in relief, as clearly illustrated in the enlarged detail of Figure 5. This solution presents the advantages of guiding better the end 7 of the breather pipe 5, of offering a greater surface of interface between the breather pipe 5 and the seat 6, and of enabling the execution of a weld along a plane line. The breather pipe 5 is generally bent, in the proximity of the end 7, in such a way as to extend in a direction substantially parallel to the main pipe 3.

The components of the filler neck 2 are conveniently made of stainless steel.

The equipment 1 basically comprises: a horizontal base 8; a rotary table 9, which is supported on the base 8 in such a way that it can rotate about a vertical axis B and is provided with equipment 10 for supporting and clamping a plurality of filler necks 2 to be welded; a laser generator 12; a focusing head 13; and a movement unit 14 designed to displace the focusing head 13 with respect to the rotary table 9 according to a plurality of co-ordinated axes, as will be described more fully in what follows.

The equipment 1 further comprises a frame 15 fixed on the base 8, which supports the laser generator 12 and the movement unit 14.

In particular, the frame 15 comprises a multiplicity of vertical uprights 16 arranged at the sharp edges of the base 8 and a meshlike superstructure 17 supported by the uprights 16, on which the generator 12 is mounted. The rotary table 9 is set in such a way as to project with a portion thereof on the outside of the frame 15, beyond a vertical plane defined by two adjacent uprights 16, in such a way as to define a loading station 19 for the filler necks 2 to be welded (Figure 1).

The superstructure 17 comprises a pair of guides 18 parallel to one another and to a first horizontal axis X.

The movement unit 14 comprises a bridge 21, which is guided at the ends on the guides 18 and is mobile in the direction X, a carriage 25, which is mobile along the bridge 21 in a horizontal direction Y perpendicular to the direction X, and a vertical column 26 supported by the carriage 25 in such a way that it is mobile in a vertical direction Z. The focusing head 13 is fixed to a bottom end 27 of the column 26 via an articulated joint 28 that enables rotation of the focusing head 13 about an axis C parallel to the axis Z. The movements of the bridge 21, of the carriage 25 and of the column 26, as well as the rotation of the focusing head 13, are governed by a control unit 30, through respective electric motors and transmission units of a conventional type (not illustrated).

The focusing head 13 is consequently mobile, with the four degrees of freedom described above, in a working space defining a welding station 29, set diametrally opposite to the loading station 19 with respect to the axis B of the rotary table 9 (Figure 1).

The laser generator 12 is conveniently of the CO₂ type, and is connected to the focusing head 13 by means of an optical reflecting system, which is of a known type and is not described in detail herein ; alternatively, a generator of an Nd:YAG type can be used, in which case the beam can be transported from the generator 12 to the focusing head 13 via optical fibres.

Represented in detail in Figure 4 is the focusing head 13, which comprises a casing 31 defining a channel 32 for inlet of the laser beam having axis C, a plane reflecting mirror 33 designed to reflect the beam along an axis D, and a parabolic focusing mirror 34 set laterally with respect to the reflecting mirror 33, along the axis D, to focus the beam L in the focus F thereof set at the intersection between the axis M of the mirror 34 and the axis C. The focusing head 13 is consequently of the so-called "zero-offset" type. The angle between the axis M and the axis C is chosen according to the application and can be equal for example to 40°.

As is known, in practice, the focus is not constituted by a point in the geometrical sense, but by a focal spot having non-negligible transverse and axial dimensions.

Conveniently fixed to the focusing head 13 is a video camera 35. The video camera 35 is connected to the control unit 30 of the movement unit of the equipment 1 and, via a software for image analysis, enables detection of the position in space of the circumferential sharp edge formed between the end section of the seat 6 and the breather pipe 5, and hence determination of the correct position of the welding line, understood as the locus of the points which identify the positions assumed by the focus F of the focusing head 13 during welding.

The equipment 10 for supporting and clamping the filler necks 2 to be welded are of a conventional type, for example pneumatically actuated clamps, and is not described in detail herein.

Conveniently, the equipment 10 is designed to support two sets 36, 37 of filler necks 2 on the rotary table 9, arranged symmetrically with respect to the axis B, so that when one set 36 is in the loading station 19 the other set 37 is in the welding station 29.

Each set is constituted by a number of filler necks 2 defined so as to optimize the loading/unloading time, for example four. The filler necks 2 of each set 36, 37 are conveniently arranged alongside one another, with the breather pipes 5 arranged above the corresponding main ducts 3 and the respective welding areas appropriately spaced apart from one another in the direction of the axes X and/or Y so as to enable access of the focusing head 13.

Operation of the equipment 1 is described in what follows.

Before being loaded onto the rotary table 9, the breather pipes 5 are interference pre-mounted in the corresponding seats 6.

The filler necks 2, in this condition of pre-assembly, are then loaded onto the rotary table 9 in the loading/unloading station 19, where, via the equipment 10, they are kept in a fixed position; the position of the welding area is, however, subject to a degree of uncertainty due to the production tolerances.

A rotation through 180° of the rotary table 9 conveys the set 36 of filler necks 2 into the welding station 29 and, simultaneously, the set 37 of filler necks already welded into the loading/unloading station 19 for unloading.

In the welding station 29, the filler necks 2 undergo welding in succession.

During welding, the focusing head 13 is displaced by the movement unit 14 on the plane XY in such a way as to maintain the axis C along the trace of the surface of interface between the breather pipe 5 and the seat 6. This is enabled by the fact that the focusing head 13 is of the zero-offset type, and consequently it is not necessary to envisage any additional motion on the plane XY for compensating for the offset of the focus F with respect to the axis C.

The welding operation is conveniently carried out by keeping the focus F of the focusing head at a constant depth with respect to the external section of the seat 6. In the case where the seat 6 is defined by a collar, the welding line can be constituted by a plane circumference, located for example at a depth of 1 mm with respect to the external section of the seat 6. Consequently, in this case, it is not necessary to use a translation of the focusing head along the axis Z.

The focusing head 13 is moreover rotated about the axis C so as to maintain the axis M of the beam L, instant by instant, on a radial plane with respect to the axis of the welding line and to ensure that the angle of incidence of the laser beam focused on the piece will be kept constant.

This set-up is kept along the most part of the welding line, designated by 40 in Figure 6, but not all along said line because the breather pipe 5, on account of its bent structure, creates a "shadow region" 41 that cannot be reached by keeping the beam on a radial plane on account of the interference that would be produced between the beam itself and the breather pipe 5. Consequently, within said area, the direction of the beam must be modified and, in particular, there must be envisaged a tangential component that is sufficient to prevent any interference. Conveniently, this is obtained by blocking rotation of the focusing head 13 about the axis C thereof and performing the welding stretch in the shadow region 41 just by the motion along the axes X and Y, with the axis M of the laser beam set in a fixed direction and having an appropriate tangential component.

In practice, as illustrated in Figure 6, the welding operation starts and ends in the shadow region 41, in such a way as to enable it to be carried out continuously. There is consequently a first welding stretch 42 in the shadow region 41, a stretch 43 outside the shadow region, along which, as explained above, the axis M is kept on a radial plane for rotation of the focusing head 13 along the axis C, and a last welding stretch 44 in the shadow region. In the stretches 42 and 44, the axis M is kept parallel to the directions assumed at the inlet into and, respectively, at the outlet from the stretch 43.

Likewise preferably provided is a small lap-weld stretch between the start and end of the weld, along the aforesaid "shadow region", in such a way as to ensure the sealed connection between the breather pipe 5 and the seat 6.

Conveniently, the welding is carried out at a constant speed, equal to 2-3 m/min. In order to prevent any local overexposure during the striking transient, the laser beam L is preferably activated when the focusing head 13 has reached the steady-state working speed.

Before carrying out the welding operation, the position of the welding area is detected automatically, to overcome the uncertainties of position due to the production tolerances. For this purpose, a preliminary cycle of movement of the focusing head 13 can be executed, which is altogether similar to the one performed for the welding operation, during which the video camera 35 films the step formed between the terminal cross section of the seat 6 and the end 7 of the breather pipe 5, and a program of image analysis, of a conventional type, calculates the position of said step.

The correct position of the welding line 40 is thus determined, and the position of the focusing head 13 during welding can consequently be controlled with high precision. A further possibility offered by the use of the video camera 35 fixed to the focusing head 13 is that of carrying out, once the welding operation is completed, a filming operation to check the quality of the weld. Also in this case, it is possible to analyse the images automatically and detect any possible imperfections.

The advantages of the present invention with respect to the methods and to the equipment of the known art are evident.

First of all, the laser welding, which is of an autogenous type, enables the use of costly weld materials to be avoided and guarantees an accurate reproducibility of the penetration and of the width of the weld seam. Since application of heat is limited, the mechanical and metallurgical properties of the components are preserved, and the geometrical distortions are reduced. Since it is a contactless welding method, the equipment for supporting the pieces can be reduced to a minimum.

The use of a zero-offset focusing head 13 enables a reduction in the displacements on the plane XY substantially to what is necessary for displacing the focus F along the welding line. This enables optimal welding rates to be achieved, without subjecting the focusing head 13 to cycles of movement that are critical from the dynamic standpoint.

The type and the power of the laser generator 12 used can be varied, as likewise the modalities of transmission of the beam L to the focusing head 13 and the movement unit 14, which may be constituted by a robot having any number of axes.

Finally, welding can be assisted by means of a covering gas delivered on the welding area in a conventional way.

## Claims

1. A method for welding a breather pipe (5) to a main pipe (3) of a filler neck (2) for a fuel tank of a motor vehicle, in which said main pipe (3) and said breather pipe (5) are made of steel and respectively have a side seat (6) and an end (7) engaging said seat, said method being **characterized in that** it comprises a step of laser welding, in which a laser beam (L) is directed along a closed welding line (40) extending along an area of jointing between said end (7) of said breather pipe (5) and said seat (6) of said main pipe (3) and
**in that** said welding line (40) is plane, and **in that** said step of laser welding is carried out by means of a focusing head (13) having at least two degrees of freedom cf translation along a first axis (X) and a second axis (Y) parallel to a plane containing said welding line (40) and a degree of freedom of rotation about a third axis (C) perpendicular to said first and second axes, said focusing head having a focus (F) lying on said third axis (C).

2. The method according to Claim 1, **characterized in that** said welding step comprises the step of subjecting said focusing head (13) tc a translatory motion, in which said third axis (C) is displaced along said welding line (40) and to a rotational motion about said third axis (C) for directing said beam (L) according to a pre-set angle of incidence.

3. The method according to Claim 2 for welding a breather pipe (5), which is shaped so as to define a shadow region (41) along a stretch of said welding line (40), said method being **characterized in that** said rotational motion of said focusing head (13) is interrupted along said shadow region (41).

4. The method according to Claim 3, **characterized in that** said welding step comprises an initial stretch (42) and a final stretch (44) in said shadow region (41).

5. The method according to Claim 4, **characterized in that** said initial stretch (42) and said final stretch (44) partially overlap one another.

6. The method according to any one of the preceding claims, **characterized in that** it comprises a preliminary step of inspection via a viewing system (35) for detecting the position of said area of joining between said main pipe (3) and said breather pipe (5).

## Patentansprüche

1. Verfahren zum Schweißen eines Entlüftungsrohres (5) bezüglich eines Hauptrohres (3) eines Einfüllstutzens (2) für einen Treibstoffbehälter eines Kraftfahrzeugs, wobei das Hauptrohr (3) und das Entlüftungsrohr (5) aus Stahl gebildet sind und ein Wandungssitz (6) beziehungsweise ein Ende (7), in Eingriff bezüglich des Wandungssitzes, aufweisen, wobei das Verfahren **dadurch gekennzeichnet ist, dass** es ein Laserschweißschritt umfasst, bei welchem ein Laserstrahl (L) entlang einer geschlossenen Schweißlinie (40) geführt ist, die sich entlang eines Übergangsbereiches zwischen dem Ende (7) des Entlüftungsrohres (5) und des Wandungssitzes (6) des Hauptrohres (3) erstreckt und **dadurch** dass die Schweißlinie (40) eben verläuft und der Laserschweißschritt von einer Fokussierkopfeinrichtung (13) ausgeführt wird, die zumindest zwei translatorische Freiheitsgrade entlang einer ersten Achse (X) und einer zweiten Achse (Y), parallel zu einer Ebene die die Schweißlinie (40) enthält, und einen rotatorischen Freiheitsgrad entlang einer dritten Achse (C), senkrecht zu den ersten und zweiten Achsen, besitzt, wobei der Fokus (F) des Fokussierkopfs auf der dritten Achse (C) liegt.

2. Verfahren gemäß Anspruch 1, **dadurch gekennzeichnet, dass** der Schweißschritt den Schritt umfasst, den Fokussierkopf (13) einer Translationsbewegung, bei welcher die dritte Achse (C) entlang der Schweißlinie (40) verschoben wird und einer Rotationsbewegung um die dritte Achse (C), zu unterziehen, um den Strahl (L) um einen entsprechenden voreingestellten Einfallswinkel zu lenken.

3. Verfahren gemäß Anspruch 2 zum Schweißen eines Entlüftungsrohres (5), welches so geformt ist, das entlang eines Abschnitts der Schweißlinie (40) ein Schattenbereich (41) entsteht, wobei das Verfahren **dadurch gekennzeichnet ist, dass** die Rotationsbewegung des Fokussierkopfes (13) entlang des Schattenbereichs (41) unterbrochen wird.

4. Verfahren gemäß Anspruch 3, **dadurch gekennzeichnet, dass** der Schweißschritt ein, in dem Schattenbereich (41) befindlichen, Anfangsabschnitt (42) und Endabschnitt (44) umfasst.

5. Verfahren gemäß Anspruch 4, **dadurch gekennzeichnet, dass** sich der Anfangsabschnitt(42) und der Endabschnitt (44) teilweise einander überlappen.

6. Verfahren nach einem der vorhergehenden Ansprüche, **dadurch gekennzeichnet, dass** es eine Überprüfungsvorstufe durch ein Betrachtungssystem (35) umfasst, um die Position des Übergangsbereiches zwischen dem Hauptrohr (3) und dem Entlüftungsrohr (5) zu erkennen.

## Revendications

1. Procédé de soudage d'un tuyau de reniflard (5) à une conduite principale (3) d'un goulot de remplissage (2) pour un réservoir de carburant d'un véhicule à moteur, dans lequel ladite conduite principale (3) et ledit tuyau de reniflard (5) sont constitués d'acier et ont respectivement une base latérale (6) et une extrémité (7) s'engageant dans ladite base, ledit procédé étant **caractérisé en ce qu'**il comprend une étape de soudage au laser, dans lequel un faisceau laser (L) est orienté le long d'une ligne de soudage fermée (40) s'étendant le long d'une zone de liaison entre ladite extrémité (7) dudit tuyau de reniflard (5) et ladite base (6) de ladite conduite principale (3) et
**en ce que** ladite ligne de soudage (40) est plane, et **en ce que** ladite étape de soudage au laser est réalisée au moyen d'une tête de concentration (13) ayant au moins deux degrés de liberté de translation le long d'un premier axe (X) et d'un deuxième axe (Y) parallèles à un plan contenant ladite ligne de soudage (40) et un degré de liberté de rotation autour d'un troisième axe (C) perpendiculaire auxdits premier et deuxième axes, ladite tête de concentration comportant un foyer (F) se situant sur ledit troisième axe (C).

2. Procédé selon la revendication 1, **caractérisé en ce que** ladite étape de soudage comprend l'étape de soumission de ladite tête de concentration (13) à un mouvement de translation, dans lequel ledit troisième axe (C) est déplacé le long de ladite ligne de soudage (40) et à un mouvement de rotation autour dudit troisième axe (C) en vue d'orienter ledit faisceau (L) conformément à un angle d'incidence prédéterminé.

3. Procédé selon la revendication 2 de soudage d'un tuyau de reniflard (5), qui est façonné de façon à définir une zone d'ombre (41) le long d'un étirement de ladite ligne de soudage (40), ledit procédé étant **caractérisé en ce que** ledit mouvement de rotation de ladite tête de concentration (13) est interrompu le long de ladite zone d'ombre (41).

4. Procédé selon la revendication 3, **caractérisé en ce que** ladite étape de soudage comprend un étirement initial (42) et un étirement final (44) dans ladite zone d'ombre (41).

5. Procédé selon la revendication 4, **caractérisé en ce que** ledit étirement initial (42) et ledit étirement final (44) se chevauchent partiellement l'un l'autre.

6. Procédé selon l'une quelconque des revendications précédentes, **caractérisé en ce qu'**il comprend une étape préliminaire d'examen par l'intermédiaire d'un système de visualisation (35) destiné à détecter la position de ladite zone de liaison entre ladite conduite principale (3) et ledit tuyau de reniflard (5).
